# FASCICULE DE BREVET EUROPEEN

(11) **EP 3 521 590 B1**
(45) Date de publication et mention de la délivrance du brevet: **17.01.2024**
(21) Numéro de dépôt: 19153792.7
(22) Date de dépôt: 25.01.2019
(51) Int. Cl.: F02C 6/08, B64D 13/06, B64D 33/10, F02C 7/14, F02C 7/18, F02C 9/18, F28F 7/02, F28D 7/00

(54) **SYSTÈME DE REFROIDISSEMENT D AIR MOTEUR À DEUX ÉTAGES DE REFROIDISSEMENT ET COMPRENANT AU MOINS UN ÉCHANGEUR CYLINDRIQUE**
ZWEISTUFIGES MOTORLUFTKÜHLUNGSSYSTEM, DAS MINDESTENS EINEN ZYLINDRISCHEN WÄRMETAUSCHER UMFASST
SYSTEM FOR COOLING ENGINE AIR WITH TWO COOLING STAGES AND COMPRISING AT LEAST ONE CYLINDRICAL HEAT EXCHANGER

(30) Priorité: 02.02.2018 FR 1850892
(43) Date de publication de la demande: 07.08.2019
(73) Titulaire: Liebherr-Aerospace Toulouse SAS, 31200 Toulouse (FR)
(72) Inventeur: ROCCHI, Jérôme, 31016 TOULOUSE Cedex 2 (FR); LOSSOUARN, David, 31016 TOULOUSE Cedex 2 (FR); BREGOLI, Mickael, 31016 TOULOUSE Cedex 2 (FR)
(74) Mandataire: Bringer, Mathieu

(56) Documents cités:
- EP-A1- 0 153 363
- EP-A2- 1 033 484
- FR-A1- 2 806 405
- US-A- 5 452 573
- US-A1- 2010 288 890

## Description

### 1. Domaine technique de l'invention

L'invention concerne un système de refroidissement d'un air haute pression prélevé sur un moteur d'un aéronef.

### 2. Arrière-plan technologique

Il est connu que les aéronefs comprennent des moyens de prélèvement d'un air haute pression, notamment sur les moteurs propulsifs de l'aéronef, qui permettent de fournir cet air haute pression, plus connu sous la dénomination anglaise d'air *bleed,* à un système d'air. La dénomination anglaise d'air bleed est adoptée dans tout le texte qui suit.

Ce système d'air a pour fonction de fournir un air à pression et/ou température contrôlées à au moins un équipement ayant un besoin d'un tel air conditionné au cours d'au moins une des phases de vol de l'aéronef.

Un tel équipement est par exemple un système de contrôle environnemental d'une cabine d'un aéronef, plus connu sous l'acronyme ECS pour la dénomination anglaise « Environnemental Control System » qui est destiné à fournir à la cabine d'aéronef (qui désigne de manière générale tout espace intérieur de l'aéronef dont la pression et/ou la température doit être contrôlée, tel qu'une cabine pour passagers, le cockpit de pilotage, une soute, etc.) un air à pression et/ou température contrôlées.

Un tel équipement peut également être un dispositif de protection contre le givrage de la voilure, plus connu sous l'acronyme anglais WIPS pour *Wing Ice Protection System,* ou un dispositif d'alimentation en air d'un système d'inertage des réservoirs d'essence.

L'air bleed est en général prélevé soit depuis un moteur propulsif d'un aéronef, soit depuis un groupe auxiliaire de puissance, plus connu sous la dénomination anglaise APU, pour *Auxiliary Power Unit,* voire depuis un système haute-pression embarqué sur un chariot au sol pour les manoeuvres au sol de l'aéronef.

Un air *bleed* est donc, au sens de l'invention, un air qui provient directement du dispositif de prélèvement d'air, c'est-à-dire en général d'un compresseur d'un moteur propulsif de l'aéronef ou d'un compresseur d'une unité auxiliaire de puissance. Cet air *bleed* est donc un air qui provient directement de ce dispositif de prélèvement avant tout traitement par la turbomachine à cycle à air d'un système de conditionnement d'air.

Il est connu que cet air bleed prélevé sur les moteurs de l' aéronef est refroidi par un échangeur thermique air/air, plus connu sous la terminologie anglaise de *precooler,* qui est adoptée dans tout le texte qui suit.

Ce precooler comprend en général un circuit chaud et un circuit froid transverses configurés pour pouvoir assurer des échanges thermiques entre le flux d'air bleed véhiculé par le circuit chaud (aussi désigné ci-après par la passe chaude ou passe primaire) et le flux d'air froid véhiculé par le circuit froid (aussi désigné ci-après par la passe froide ou passe secondaire).

Le circuit froid est alimenté par un flux d'air prélevé sur l'écoulement secondaire du moteur, connu sous la dénomination de fan air, dont la température est proche de l'environnement extérieur de l'aéronef, et qui peut donc atteindre en vol des températures de l'ordre de -50°C et une pression de l'ordre de 200 mbar.

La passe froide est équipée d'une vanne de régulation qui permet de contrôler le débit d'air de cette passe de manière à pouvoir piloter la température de sortie de la passe chaude en fonction de la température de l'air bleed prélevé sur le moteur qui dépend du régime de fonctionnement du moteur.

En général, le pilotage de precooler permet de fournir un air en sortie du circuit chaud qui présente une température comprise entre 200°C et 250°C pour un air en entrée qui peut atteindre des températures de l'ordre de 600°C et une pression de l'ordre de 40 bars.

Ce precooler est agencé dans l'environnement moteur et subit donc des contraintes vibratoires, thermiques et mécaniques.

En particulier, le volume de l'échangeur thermique est dicté par les besoins en puissance d'échange thermique et les caractéristiques des sources et conduites d'alimentation en air chaud et en air froid.

Les différentiels de pression et de température entre les passes chaude et froide imposent l'utilisation de matériaux présentant des caractéristiques mécaniques compatibles avec les hautes températures mentionnées précédemment, tels que l'acier, ce qui rend le precooler lourd et encombrant. Cet encombrement et ce poids significatif impacte les performances énergétiques de l'aéronef.

Il existe donc un besoin de disposer d'une solution nouvelle permettant de refroidir l'air haute-pression prélevé sur les moteurs d'un aéronef, en particulier sur les moteurs propulsifs, tout en limitant au maximum l'encombrement et le poids d'un tel système de refroidissement.

Les documents US2010288890 A1 et EP1033484 A2 décrivent des systèmes connus de l'art antérieur.

### 3. Objectifs de l'invention

L'invention vise à fournir un système de refroidissement d'air bleed qui pallie au moins certains des inconvénients des solutions connues.

L'invention vise en particulier à fournir, dans au moins un mode de réalisation, un système de refroidissement d'air bleed qui présente un encombrement réduit par rapport aux solutions antérieures.

L'invention vise aussi à fournir, dans au moins un mode de réalisation, un système de refroidissement d'air bleed qui permet de réduire le prélèvement d'air frais sur l'étage fan du moteur.

L'invention vise aussi à fournir, dans au moins un mode de réalisation, un système de refroidissement d'air bleed qui peut s'adapter à différentes architectures, en particulier dans des environnements exigus et complexes.

L'invention vise aussi à fournir un système de conditionnement d'air bleed équipé d'un tel système de refroidissement d'air selon l'invention.

### 4. Exposé de l'invention

Pour ce faire, l'invention concerne un système de refroidissement d'un air, dit air bleed, prélevé sur un moteur d'un aéronef et destiné à alimenter en air à température contrôlée au moins un équipement.

Le système de refroidissement selon l'invention est caractérisé en ce qu'il comprend :
- un circuit d'air adapté pour mettre en communication de fluide des moyens de prélèvement d'air bleed sur ledit moteur et ledit équipement, ledit circuit d'air comprenant au moins une conduite cylindrique de circulation d'air bleed agencée en zone moteur,
- un premier échangeur thermique cylindrique de refroidissement air/air enchâssé dans ladite conduite cylindrique de circulation d'air bleed en zone moteur, ledit premier échangeur comprenant un circuit primaire adapté pour être alimenté par ledit air bleed, et un circuit secondaire, parallèle au circuit primaire, adapté pour être alimenté par une source d'air froid, lesdits circuits primaire et secondaire étant configurés pour pouvoir assurer des échanges thermiques entre le flux d'air du circuit primaire et le flux d'air du circuit secondaire, de manière à former un premier étage de refroidissement de l'air bleed prélevé sur le moteur,
- un deuxième échangeur thermique de refroidissement d'air agencé en dehors de la zone moteur, ledit deuxième échangeur comprenant un circuit primaire adapté pour être alimenté par l'air issu du circuit primaire dudit premier étage de refroidissement, et un circuit secondaire, adapté pour être alimenté par une source d'air froid, lesdits circuits étant configurés pour pouvoir assurer des échanges thermiques entre le flux d'air du circuit primaire et le flux d'air du circuit secondaire, de manière à former un deuxième étage de refroidissement de l'air bleed prélevé sur le moteur, ledit flux d'air en sortie de ce deuxième étage de refroidissement alimentant ledit équipement.

Un système de refroidissement d'un air bleed selon l'invention comprend donc deux échangeurs thermiques de refroidissement d'air, aussi désignés ci-après par le terme anglais de *precooler,* agencés respectivement dans une première et deuxième zone de l'aéronef. Dans le cas d'un refroidissement d'un air bleed prélevé sur un moteur propulsif de l'aéronef, le precooler du premier étage de refroidissement est par exemple logé dans la nacelle du moteur propulsif (qui forme alors la première zone de l'aéronef au sens de l'invention) et le precooler du deuxième étage de refroidissement est par exemple logé dans le pylône (ou mat) du moteur de l'aéronef (qui forme alors la deuxième zone de l'aéronef au sens de l'invention), qui relie le moteur à la voilure ou au fuselage de l'aéronef. Le precooler du deuxième étage peut également être avantageusement logé dans le ventre mou de l'aéronef ou au sein d'une baie non pressurisée du fuselage de l'aéronef.

Selon certains modes de réalisation (qui dépendent des caractéristiques de l'aéronef), la première zone de l'aéronef est formée par la combinaison de la zone moteur (ou nacelle) de l'aéronef et de la zone pylône de sorte que le premier échangeur thermique peut, dans ces modes de réalisation, s'étendre à cheval sur les zones moteur et pylône.

Selon certains modes de réalisation (qui dépendent des caractéristiques du moteur et de l'aéronef), les première et deuxième zones peuvent également être formées par une même zone de l'aéronef, par exemple la zone pylône du moteur de l'aéronef, qui comprend alors à la fois le premier échangeur thermique et le deuxième échangeur thermique d'un système selon l'invention.

Selon d'autres modes de réalisation, les première et deuxième zones sont des zones distinctes de l'aéronef.

Le système selon l'invention comprend donc deux précoolers agencés en série sur la passe chaude du système d'air, ce qui permet de réduire l'encombrement et le poids du precooler du premier étage de refroidissement, et facilite son intégration dans la zone moteur. Le complément de refroidissement est assuré par le précooler du deuxième étage qui est déporté dans une zone moins critique en termes de volume ou de poids.

En outre, la particularité de l'invention est d'enchâsser le premier precooler agencé dans la zone moteur dans une conduite cylindrique du circuit d'air. Pour ce faire, ce precooler est lui-même cylindrique.

Dans tout le texte, le terme « cylindrique » est utilisé au sens mathématique du terme, de sorte qu'une conduite cylindrique est un solide engendré par une droite qui se déplace parallèlement à elle-même sur une génératrice. Cette génératrice peut être un cercle, auquel cas la conduite cylindrique présente une section droite circulaire (et forme un cylindre au sens commun du terme). La génératrice peut également être un carré auquel cas la conduite cylindrique présente alors une section droite carrée. D'une manière générale, la génératrice peut être de tous types, circulaire, carrée, ovale, triangulaire, etc, même si en pratique la conduite cylindrique est à section droite circulaire.

Un premier échangeur thermique cylindrique (aussi qualifié ci-après de tubulaire) permet son logement dans une conduite cylindrique (ou tubulaire) préexistante, ce qui limite très fortement l'espace utilisé dans l'environnement moteur par un tel échangeur thermique. En effet, la conduite de circulation d'air bleed reliant le moteur et un équipement est présente dans tous les systèmes d'air. L'invention tire donc profit de cette conduite préexistante pour y loger le premier échangeur thermique. En d'autres termes, l'invention prévoit de fonctionnaliser une conduite de circulation d'air bleed en y logeant le premier échangeur thermique et en conférant ainsi à cette conduite une fonctionnalité supplémentaire de premier étage de refroidissement.

Avantageusement et selon l'invention, ledit circuit primaire et ledit circuit secondaire dudit premier échangeur dudit premier étage de refroidissement sont orientés à contre-courant.

Selon cette variante avantageuse, les flux de circulation d'air des circuits primaire et secondaire sont parallèles mais suivent des directions opposées. Cela permet d'améliorer les échanges thermiques entre les flux des circuit primaire et secondaire dans l'environnement cylindrique de l'échangeur.

La plupart des échangeurs thermiques connus présentent des circuits perpendiculaires de sorte que le flux secondaire traverse le flux primaire selon une direction perpendiculaire à la direction du flux primaire.

Cette configuration peut être choisie pour le deuxième échangeur thermique. En revanche, un système selon l'invention prévoit un premier échangeur thermique cylindrique dont les flux sont parallèles l'un à l'autre. Les inventeurs ont déterminé que l'orientation à contre-courant des échanges thermiques permet d'améliorer les performances de refroidissement.

Avantageusement et selon l'invention, ledit échangeur thermique cylindrique comprend un carter cylindrique s'étendant le long d'une direction longitudinale et présentant une bouche d'admission/évacuation d'air à chaque extrémité longitudinale, ledit échangeur comprenant en outre un treillis en matériau conducteur de chaleur formant aux moins deux circuits de circulation d'air non communiquant entre eux et s'étendant entre lesdites bouches d'admission/évacuation pour former respectivement le circuit primaire et le circuit secondaire dudit échangeur thermique.

Un treillis en matériau conducteur de chaleur permet de former au moins deux circuits de circulation d'air non communiquant permettant de former les circuits primaire et secondaire adaptés pour assurer des échanges thermiques entre le flux d'air bleed circulant dans le circuit primaire et le flux d'air froid circulant dans le circuit secondaire.

Ce treillis en matériau conducteur de chaleur peut être de tous types. Dans tout le texte, les termes « treillis en matériau conducteur de chaleur » désignent un treillis en un matériau présentant une conductivité thermique supérieure à 10 W·m⁻¹·K⁻¹, de préférence supérieure à 100 W·m⁻¹·K⁻¹.

Selon une variante de l'invention, le treillis en matériau conducteur de chaleur est formée par une mousse métallique.

Selon une autre variante avantageuse de l'invention, le treillis est formé d'une pluralité de tubes creux cylindriques s'étendant longitudinalement dans ledit carter entre lesdites bouches d'admission/évacuation et agencés les uns par rapport aux autres de manière à laisser libre un espace inter-tubes de circulation d'air, lesdits tubes creux cylindriques formant un des circuits primaire ou secondaire dudit échangeur thermique et l'espace inter-tubes formant le circuit complémentaire.

Cette architecture permet de faire circuler un premier flux d'air dans un ensemble de tubes creux et d'utiliser l'espace inter-tubes pour faire circuler le flux complémentaire, c'est-à-dire le flux secondaire si le flux circulant dans les tubes est le flux primaire, et le flux primaire si le flux circulant dans les tubes est le flux secondaire.

Avantageusement et selon l'invention, lesdits tubes creux cylindriques sont configurés pour former ledit circuit primaire dudit échangeur thermique cylindrique.

Cette configuration permet d'améliorer les échanges thermiques entre le flux chaud circulant dans les tubes creux et le flux froid circulant dans l'espace intert-tubes.

Avantageusement et selon l'invention, ledit échangeur cylindrique comprend en outre des éléments structurants reliant au moins deux tubes creux cylindriques de manière à rigidifier le treillis métallique formé par lesdits tubes creux.

Cette variante avantageuse permet de doter le treillis métallique de renforts mécaniques agencés dans les espaces inter-tubes et destinés à solidariser les tubes les uns aux autres.

Selon une variante de l'invention, ledit circuit secondaire en sortie dudit deuxième étage de refroidissement alimente ledit circuit secondaire en entrée dudit premier étage de refroidissement.

Cette variante particulière utilise la sortie du circuit froid du deuxième étage de refroidissement comme source d'air froid du premier étage de refroidissement.

Selon une autre variante de l'invention, ladite source d'air froid alimentant ledit deuxième étage de refroidissement est indépendante de ladite source d'air froid alimentant ledit premier étage de refroidissement.

Pour ce faire, la première source d'air froid peut, par exemple, être formée par un air prélevé sur un écoulement secondaire du moteur, dit air fan, et la deuxième source d'air froid peut, par exemple, être formée par un air à la pression dynamique, dit air RAM, prélevé depuis une prise d'air extérieure.

Un système selon cette variante avantageuse permet de limiter le prélèvement d'air froid sur l'écoulement secondaire du moteur. En particulier, le prélèvement sur l'écoulement secondaire du moteur est limité au premier étage de refroidissement. Le précooler du deuxième étage de refroidissement est avantageusement agencé au voisinage d'une prise d'air dynamique qui fait office de deuxième source d'air froid.

Un échangeur thermique d'un système selon l'invention peut être fabriqué en « Inconel^{®} » ou en Carbure de Silicium (ou Silicone Carbide).

Un échangeur en Carbure de Silicium permet de réduire le poids de l'échangeur et participe donc à la réduction de la consommation énergétique de l'aéronef équipé d'un système selon cette variante.

Aussi, de préférence, l'échangeur cylindrique du premier étage de refroidissement est formé en Carbure de Silicium et ledit deuxième échangeur est formé en Inconel.

Avantageusement et selon l'invention, le système comprend deux équipements à alimenter en air à température contrôlée, dits respectivement premier et deuxième équipement, ledit système comprenant en outre :
- une conduite de contournement, dite conduite de by-pass s'étendant entre un noeud agencé entre le premier échangeur thermique et le deuxième échangeur thermique et ledit deuxième équipement, ladite conduite étant équipée d'un moyen de contrôle du débit d'air circulant dans ladite conduite de by-pass de manière à pouvoir, sur commande, alimenter directement en air refroidi par ledit premier étage de refroidissement ledit deuxième équipement, sans passer par ledit deuxième étage de refroidissement,
- une conduite de dérivation s'étendant entre un noeud agencé entre le premier échangeur thermique et le deuxième échangeur thermique et ledit premier équipement, ladite conduite étant équipée d'un moyen de contrôle du débit d'air circulant dans ladite conduite de dérivation de manière à pouvoir, sur commande, alimenter en air refroidi par ledit premier étage de refroidissement ledit premier équipement.

Un système selon cette variante avantageuse permet donc d'alimenter, selon les phases de vol de l'aéronef et en fonction des commandes appliquées aux moyens de contrôle de débit d'air de la conduite de by-pass et de la conduite de dérivation, les équipements suivants :
- le premier équipement directement avec de l'air refroidi uniquement par le premier étage de refroidissement (par le biais de la conduite de dérivation)
- le deuxième équipement directement avec de l'air refroidi uniquement par le premier étage de refroidissement (par le biais de la conduite de by-pass)
- le deuxième équipement par un air refroidi à la fois par le premier étage et le deuxième étage de refroidissement.

Un système selon cette variante peut être commandé (par le biais des moyens de contrôle des débits d'air de la conduite de by-pass et de la conduite de dérivation) pour qu'en fonctionnement normal, le deuxième étage de refroidissement ne soit pas utilisé, de sorte que le premier et le deuxième équipements sont chacun alimentés par l'air refroidi uniquement par le premier étage de refroidissement et fonctionnent donc chacun à la même température.

En cas de panne, les équipements peuvent solliciter un surplus de débit d'air qui ne permet pas de maintenir la même température en sortie du premier étage de refroidissement. Avantageusement, le premier équipement est dimensionné pour être compatible avec un fonctionnement à cette température plus élevée en cas de panne. En cas de panne, le deuxième étage de refroidissement est alors activé pour pouvoir fournir le complément de refroidissement permettant de fournir au deuxième équipement un air à la même température qu'en fonctionnement normal du système. Le premier équipement est alimenté par l'air fourni par le premier étage de refroidissement étant donné qu'il a été dimensionné pour pouvoir fonctionner à ce niveau de température.

Le système peut également être commandé de sorte qu'en cas de panne, un refroidissement supplémentaire est fourni au deuxième équipement par le biais d'une désactivation du premier équipement de sorte que le premier étage de refroidissement et le deuxième étage de refroidissement alimentent chacun le deuxième équipement en air. Cette configuration peut par exemple être utilisée dans une phase de transition ou une phase de fin de vol.

L'invention concerne également un aéronef comprenant au moins un moteur propulsif et au moins un équipement adapté pour être alimenté en air à température contrôlée.

Un aéronef selon l'invention est caractérisé en ce qu'il comprend en outre au moins un système de refroidissement d'air prélevé sur ledit moteur propulsif selon l'invention.

L'invention concerne également un système de refroidissement caractérisé en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique fonctionnelle d'un système selon un mode de réalisation de l'invention,
- la figure 2 est une vue schématique fonctionnelle d'un système selon un autre mode de réalisation de l'invention,
- la figure 3 est une vue schématique en perspective tronquée d'un échangeur thermique cylindrique d'un système selon un mode de réalisation de l'invention,
- les figures 4a, 4b, 4c, et 4d sont des vues schématiques en coupe d'un échangeur thermique cylindrique d'un système selon d'autres modes de réalisation de l'invention,
- la figure 5 est une vue schématique fonctionnelle détaillée d'un système selon un mode de réalisation de l'invention,
- la figure 6 est une vue schématique d'un aéronef selon un mode de réalisation de l'invention équipé d'un système de refroidissement selon un mode de réalisation de l'invention.

### 6. Description détaillée d'un mode de réalisation de l'invention

Sur les figures, les échelles et les proportions ne sont pas strictement respectées et ce, à des fins d'illustration et de clarté.

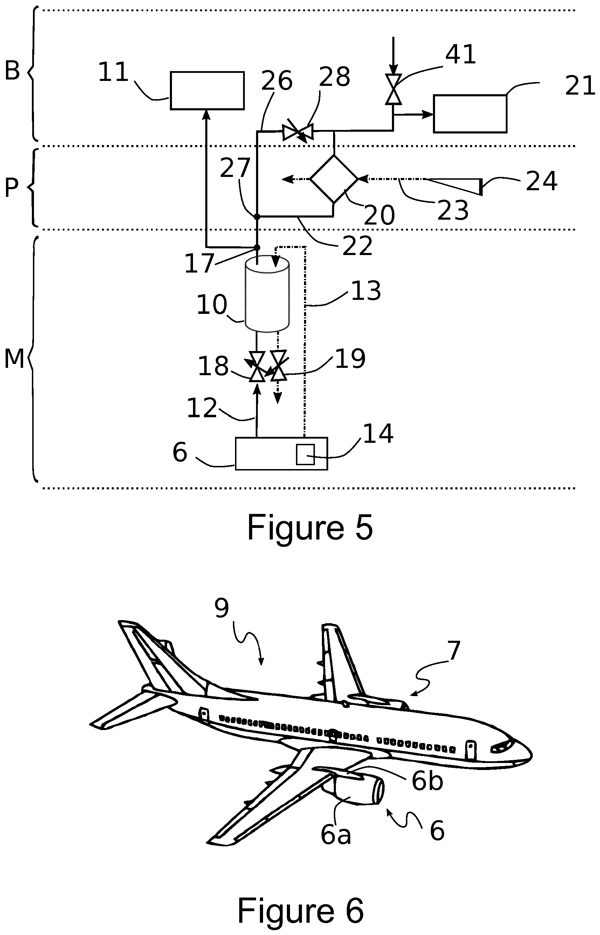

Un aéronef 9 selon l'invention comprend, tel que représenté schématiquement sur la figure 6, des moteurs principaux 6, 7 dédiés à la propulsion de l'aéronef comprenant chacun un compresseur et une turbine non représentés sur la figure.

L'aéronef comprend en outre au moins un système de refroidissement de l'air bleed prélevé sur le compresseur d'un moteur principal destiné à alimenter en air à température contrôlée au moins un équipement 11, 21, de préférence deux équipements 11, 21. Ces équipements 11, 21 peuvent être de tous types.

Par exemple, et tel que représenté sur la figure 5, l'équipement 11 est un dispositif de protection contre le givrage de la voilure, plus connu sous l'acronyme anglais WIPS pour *Wing Ice Protection System* et l'équipement 21 est un pack de conditionnement (ou système de contrôle environnemental d'une cabine de l'aéronef plus connu sous l'acronyme ECS pour la dénomination anglaise *Environnemental Control System*). Un tel pack ECS est configuré pour conditionner l'air fourni par le système de refroidissement d'air bleed selon l'invention. Un tel système comprend de manière connue au moins un échangeur thermique air/air, connu sous l'acronyme anglais PHX pour *Primary Heat Exchanger,* qui a pour objectif de refroidir l'air en entrée de pack ECS (qui est le flux d'air en sortie du deuxième étage de refroidissement dans le cadre de l'invention). Le pack ECS 21 comprend également une turbomachine à cycle à air, plus connue sous l'acronyme anglais ACM pour *Air Cycle Machine,* qui comprend au moins un compresseur ayant pour fonction de comprimer l'air en sortie de l'échangeur PHX. Le pack ECS comprend également un deuxième échangeur thermique air/air, plus connu sous l'acronyme anglais MHX pour *Main Heat Exchanger* qui a pour objectif de refroidir l'air en sortie de compresseur. Les circuits d'air froid des échangeurs PHX et MHX sont en général formés par un air à pression dynamique prélevé à l'extérieur. Le pack ECS comprend également une boucle d'extraction d'eau destinée à déshumidifier l'air avant son injection dans la turbine de la turbomachine à cycle à air ACM pour être détendu et distribué vers une chambre de mélange reliée à la cabine.

En d'autres termes, un système selon l'invention dont l'équipement 21 est un pack ECS comprend au moins trois échangeurs thermiques en série sur le circuit d'air bleed prélevé sur le moteur de l'aéronef en amont de la turbomachine à cycle à air : l'échangeur thermique 10 du premier étage de refroidissement, l'échangeur thermique 20 du deuxième étage de refroidissement et l'échangeur PHX en entrée du pack ECS.

Selon d'autres modes de réalisation, cet équipement 21 peut également être un dispositif d'alimentation en air d'un système d'inertage des réservoirs d'essence.

De préférence, l'aéronef comprend un système de refroidissement pour chaque moteur principal 6, 7 dédié à la propulsion.

Dans toute la suite, nous décrivons le système de refroidissement en lien avec le moteur propulsif 6, étant entendu que le système de refroidissement de l'air bleed prélevé sur l'autre moteur propulsif 7 peut présenter une architecture et un fonctionnement identique au système décrit en lien avec le moteur propulsif 6.

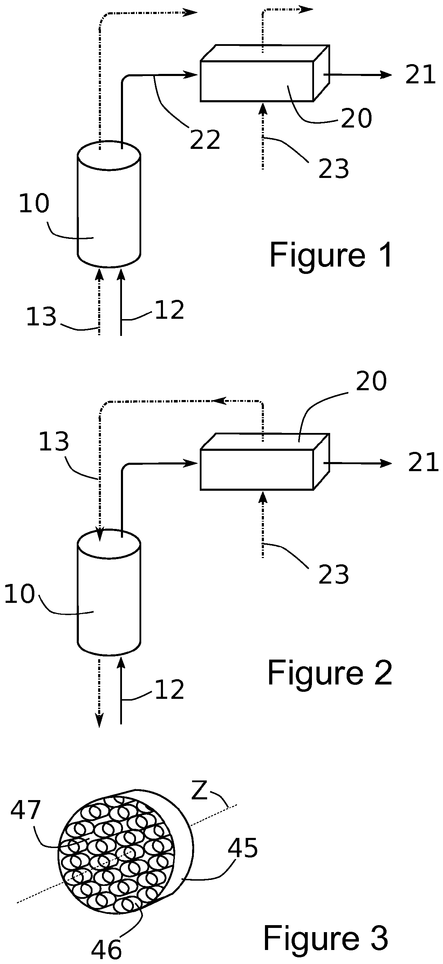

Le système de refroidissement de l'air bleed prélevé sur le moteur propulsif 6 comprend tel que représenté schématiquement sur les figures 1 et 2, deux échangeurs thermiques 10, 20, formant chacun un étage de refroidissement de l'air bleed prélevé sur le moteur de l'aéronef.

Le premier échangeur thermique 10, aussi désigné par le terme anglais de precooler du premier étage de refroidissement est agencé, selon un mode préférentiel de réalisation de l'invention, en zone moteur, par exemple dans la nacelle 10a du moteur, telle que représentée sur la figure 6. Le deuxième échangeur thermique 20, aussi désigné par le terme anglais de precooler, est agencé, selon un mode préférentiel de réalisation de l'invention, dans la zone du mat 6b du moteur propulsif. Selon d'autres modes de réalisation, le deuxième échangeur peut être agencé dans le ventre mou de l'aéronef ou dans une baie non pressurisée de l'aéronef.

Selon l'invention, le premier échangeur thermique est un échangeur cylindrique enchâssé dans une conduite cylindrique de circulation d'air agencée en zone moteur.

La conduite cylindrique de circulation d'air n'est pas représentée sur les figures à des fins de clarté. Cela étant, l'homme du métier connait les conduites de circulation d'air des systèmes d'air agencées entre un moyen de prélèvement d'air bleed d'un moteur et un équipement à alimenter en air.

Selon l'invention, un échangeur thermique cylindrique est enchâssé dans une telle conduite. Cet enchâssement peut être obtenu, par exemple, en insérant l'échangeur thermique cylindrique dans la conduite à partir d'une de ses extrémités et en la fixant dans la conduite par tous moyens connus. Le dimensionnement de l'échangeur thermique est effectué en fonction de la conduite. Par exemple, pour une conduite cylindrique à base circulaire d'un diamètre de 150mm, l'échangeur thermique présente un carter 25 cylindrique à base circulaire de 145 à 150 mm et est fixé dans la conduite par des moyens de fixation appropriés, tels que des rivets, des plaques métalliques de fixation, etc..

Cet échangeur thermique comprend un circuit primaire adapté pour être alimenté par ledit air bleed, et un circuit secondaire, parallèle au circuit primaire, adapté pour être alimenté par une source d'air froid, lesdits circuits primaire et secondaire étant configurés pour pouvoir assurer des échanges thermiques entre le flux d'air du circuit primaire et le flux d'air du circuit secondaire, de manière à former un premier étage de refroidissement de l'air bleed prélevé sur le moteur.

La figure 1 illustre schématiquement un système selon un mode de réalisation de l'invention dans lequel les flux de circulation d'air primaire et secondaire du premier échangeur thermique sont parallèles et de même direction alors que les figures 2 et 3 illustrent schématiquement un système selon un autre mode de réalisation de l'invention dans lequel les flux de circulation d'air primaire et secondaire du premier échangeur thermique cylindrique sont orientés à contre-courant. Sur la figure 2, les échangeurs thermiques 10 et 20 sont alimentés par une même source d'air froid alors que sur les figures 1 et 3, les sources d'air froid sont distinctes.

Sur les figures 1 et 2, les flèches en traits continus représentent les flux chauds primaires et les flèches en traits discontinus représentent les flux froids secondaires.

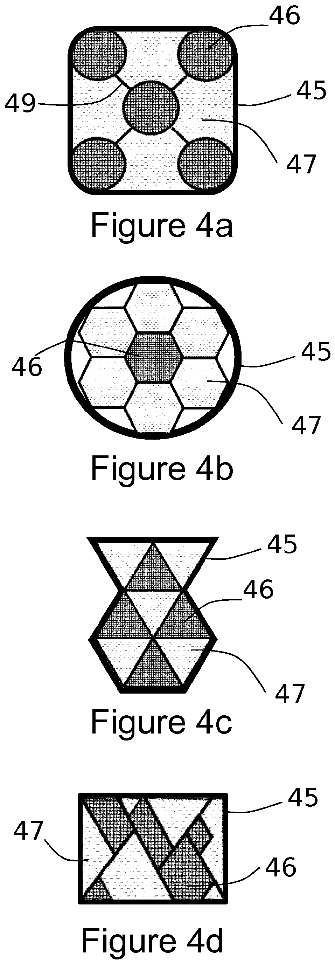

Ainsi, sur la figure 1, le premier échangeur thermique 10 comprend un circuit primaire 12 alimenté en air par l'air bleed prélevé sur un moteur de l'aéronef (par exemple sur le moteur 6 propulsif de l'aéronef représenté sur la figure 4) et un circuit secondaire 13 alimenté en air par une source d'air froid, tel que par exemple l'air fan du moteur propulsif.

Les circuits primaire 12 et secondaire 13 du premier échangeur thermique sont parallèles l'un à l'autre.

De préférence et tel que représenté sur la figure 5, le circuit secondaire 13 est équipé d'une vanne 19 de régulation du débit d'air circulant dans le circuit secondaire, ce qui permet de réguler les échanges thermiques entre le circuit chaud 12 et le circuit froid 13, et donc de réguler la température du flux d'air du circuit chaud en sortie de l'échangeur thermique 10. En outre, le circuit primaire 12 est de préférence équipé d'une vanne de régulation 18 du flux d'air bleed adressé à l'échangeur thermique 10. Cette vanne de régulation 18 est de préférence à la fois une vanne de régulation et une vanne d'arrêt commandé, permettant d'isoler le moteur propulsif du système d'air en cas de besoin.

Le deuxième échangeur thermique 20 comprend également un circuit primaire 22 alimenté en air par l'air bleed refroidi par le premier échangeur thermique 10. En d'autres termes, l'entrée du deuxième échangeur thermique 20 est reliée à la sortie du premier échangeur thermique 10. L'échangeur thermique 20 comprend également un circuit secondaire 23 alimenté en air par un air prélevé, par exemple sur une prise d'air à pression dynamique RAM 24.

Le deuxième échangeur comprend en outre de manière connue un carter parallélépipédique dans lequel le circuit primaire et le circuit secondaire se croisent au niveau d'ailettes métalliques logées dans le carter et configurées pour permettre des échanges thermiques entre le flux d'air du circuit primaire et le flux d'air du circuit secondaire de manière à ce que le flux d'air secondaire qui est un flux d'air froid, puisse refroidir le flux d'air primaire, qui est un flux d'air chaud (mais ayant déjà subi un premier refroidissement par le premier échangeur thermique 10 du système de refroidissement) issu du premier étage de refroidissement. Le flux d'air du circuit primaire alimente alors l'équipement 21.

La figure 3 illustre schématiquement en perspective tronquée un échangeur cylindrique selon un mode de réalisation de l'invention.

Cet échangeur 10 comprend un carter 45 cylindrique s'étendant le long d'une direction longitudinale Z et présentant une bouche d'admission/évacuation d'air à chaque extrémité longitudinale.

L'échangeur comprend en outre une pluralité de tubes creux 46 s'étendant longitudinalement dans le carter 45 entre les bouches d'admission/évacuation.

Ces tubes creux sont agencés les uns par rapport aux autres de manière à laisser libre un espace 47 inter-tubes de circulation d'air.

Ainsi, les tubes creux 46 forment le circuit primaire 12 ou le circuit secondaire 13 et l'espace 47 inter-tubes forme le circuit complémentaire.

De préférence, les tubes creux 46 sont fabriqués en Carbure de Silicium.

Les figures 4a, 4b, 4c et 4d représentent d'autres structures possibles pour l'échangeur thermique cylindrique. Sur ces figures, les zones quadrillées représentent les tubes creux formant le circuit primaire et les zones hachurées horizontalement représentent les espaces inter-tubes formant le circuit secondaire.

En particulier, sur la figure 4a, l'échangeur thermique 10 loge au sein de son carter 45 cinq tubes creux cylindriques à base circulaire dans lesquels circule le flux d'air chaud prélevé sur le moteur de l'aéronef. Ces tubes creux 46 sont en outre reliés les uns aux autres par des renforts 49 permettant de rigidifier l'échangeur thermique. L'espace inter-tubes 47 forme le circuit secondaire dans lequel circule le flux d'air froid prélevé par exemple sur l'écoulement secondaire du moteur de l'aéronef.

Sur la figure 4b, l'échangeur thermique 10 loge au sein de son carter 45 un tube creux cylindrique à base hexagonale formant le circuit primaire de circulation de l'air bleed.

Les figures 4c et 4d présentent d'autres types de formes et d'agencement intérieur de l'échangeur thermique cylindrique étant entendu que les modes de réalisation représentés ne sont que des exemples et que d'autres structures sont possibles pour assurer des échanges thermiques entre deux circuits d'air logés dans un carter cylindrique.

Tel que représenté sur la figure 5, le système de refroidissement comprend également de préférence deux équipements 11, 21 à alimenter en air et une conduite de by-pass 26 s'étendant entre un noeud 27 agencé entre le premier échangeur thermique 10 et le deuxième échangeur thermique 20 et le deuxième équipement 21.

Cette conduite de by-pass 26 est équipée d'un moyen de contrôle du débit d'air circulant dans la conduite de by-pass 26. Ce moyen de contrôle du débit d'air est par exemple une vanne 28 de régulation de débit, qui peut être de tout type. La commande de cette vanne 28 de régulation de débit d'air permet d'alimenter directement en air refroidi par le premier échangeur thermique 10 le deuxième équipement 21, sans passer par le deuxième échangeur thermique 20.

Le système de refroidissement comprend également de préférence une conduite de dérivation 16 s'étendant entre un noeud 17 agencé entre le premier échangeur thermique 10 et le deuxième échangeur thermique 20 et le premier équipement 11.

Cette conduite de dérivation 16 est équipée d'un moyen de contrôle du débit d'air circulant dans la conduite de dérivation 16 de manière à pouvoir, sur commande, alimenter en air refroidi par le premier échangeur thermique 10 le premier équipement 11. Ce moyen de contrôle du débit d'air est par exemple une vanne de régulation de débit d'air, non représenté sur les figures.

Selon un mode de réalisation, le noeud 17 et le noeud 27 formés entre le premier échangeur thermique 10 et le deuxième échangeur thermique 20 sont un même et unique noeud.

Le système d'air comprend également de préférence une vanne 41 de liaison du système d'air du moteur propulsif 6 au système d'air d'un autre moteur propulsif 7. Une telle vanne 41 permet de relier ensemble deux systèmes d'air de deux moteurs distincts de manière à ce qu'un système puisse supplanter un autre système en cas de panne de ce dernier.

Sur la figure 4, la zone M désigne la zone moteur, la zone P désigne la zone pylône du moteur et la zone B désigne la zone d'une baie d'équipements de l'aéronef. Comme indiqué précédemment, la zone moteur M peut correspondre à la nacelle du moteur propulsif et la zone pylône P peut correspondre à la zone pylône du moteur propulsif.

L'invention ne se limite pas aux seuls modes de réalisation décrits. En particulier, selon d'autres modes de réalisation, l'échangeur thermique du deuxième étage de refroidissement peut également être un échangeur cylindrique enchâssé dans une conduite de circulation de manière à fonctionnaliser une autre conduite du système d'air.

## Revendications

1. Système de refroidissement d'un air, dit air bleed, prélevé sur un moteur (6, 7) d'un aéronef (9) pendant l'utilisation du système et destiné à alimenter en air à température contrôlée au moins un équipement (21), **caractérisé en ce que** ledit système comprend :
- un circuit d'air adapté pour mettre en communication de fluide des moyens de prélèvement d'air bleed sur ledit moteur (6, 7) et ledit équipement (21), ledit circuit d'air comprenant au moins une conduite cylindrique de circulation d'air bleed adaptée pour être agencée dans une première zone (M) de l'aéronef,
- un premier échangeur thermique cylindrique (10) de refroidissement air/air enchâssé dans ladite conduite cylindrique de circulation d'air bleed, ledit premier échangeur (10) comprenant un circuit primaire (12) adapté pour être alimenté par ledit air bleed, et un circuit secondaire (13), s'étendant globalement parallèlement au circuit primaire, adapté pour être alimenté par une source d'air froid (14), lesdits circuits primaire (12) et secondaire (13) étant configurés pour pouvoir assurer des échanges thermiques entre le flux d'air du circuit primaire et le flux d'air du circuit secondaire, de manière à former un premier étage de refroidissement de l'air bleed prélevé sur le moteur,
- un deuxième échangeur thermique (20) de refroidissement d'air adapté pour être agencé dans une deuxième zone (P) de l'aéronef, ledit deuxième échangeur thermique (20) comprenant un circuit primaire (22) adapté pour être alimenté par l'air issu du circuit primaire (12) dudit premier étage de refroidissement, et un circuit secondaire (23), adapté pour être alimenté par une source de fluide froid (24), lesdits circuits étant configurés pour pouvoir assurer des échanges thermiques entre le flux d'air du circuit primaire (22) et le flux de fluide du circuit secondaire (23), de manière à former un deuxième étage de refroidissement de l'air bleed prélevé sur le moteur, ledit flux d'air en sortie de ce deuxième étage de refroidissement étant adapté pour alimenter ledit équipement (21).

2. Système selon la revendication 1, **caractérisé en ce que** ledit circuit primaire (12) et ledit circuit secondaire (13) dudit premier échangeur thermique cylindrique (10) dudit premier étage de refroidissement sont orientés à contre-courant.

3. Système selon l'une des revendications 1 ou 2, **caractérisé en ce que** ledit échangeur thermique cylindrique (10) comprend un carter cylindrique (45) s'étendant le long d'une direction longitudinale (Z) et présentant une bouche d'admission/évacuation d'air à chaque extrémité longitudinale, ledit échangeur (10) comprenant en outre un treillis en matériau conducteur de chaleur formant aux moins deux circuits de circulation d'air non communiquant entre eux et s'étendant entre lesdites bouches d'admission/évacuation pour former respectivement le circuit primaire et le circuit secondaire dudit échangeur thermique.

4. Système selon la revendication 3, **caractérisé en ce que** ledit treillis est formé d'une pluralité de tubes creux (46) cylindriques s'étendant longitudinalement dans ledit carter (45) entre lesdites bouches d'admission/évacuation et agencés les uns par rapport aux autres de manière à laisser libre un espace (47) inter-tubes de circulation d'air, lesdits tubes creux (46) cylindriques formant un des circuits primaire ou secondaire dudit échangeur thermique et l'espace (47) inter-tubes formant le circuit complémentaire.

5. Système selon la revendication 4, **caractérisé en ce que** lesdits tubes creux (46) cylindriques sont configurés pour former ledit circuit primaire dudit échangeur thermique cylindrique (10).

6. Système selon l'une des revendications 4 à 5, **caractérisé en ce que** ledit échangeur cylindrique (10) comprend en outre des éléments structurants reliant au moins deux tubes creux (46) cylindriques de manière à rigidifier le treillis métallique formé par lesdits tubes creux (46).

7. Système selon l'une des revendications 1 à 6, **caractérisé en ce que** ledit circuit secondaire (23) en sortie dudit deuxième étage de refroidissement alimente ledit circuit secondaire (13) en entrée dudit premier étage de refroidissement.

8. Système selon l'une des revendications 1 à 6, **caractérisé en ce que** ladite source de fluide froid (24) alimentant ledit deuxième étage de refroidissement est indépendante de ladite source d'air froid (14) alimentant ledit premier étage de refroidissement.

9. Système selon l'une des revendications 1 à 8, **caractérisé en ce que** ladite source de fluide froid (24) dudit deuxième étage de refroidissement est formée par un air à la pression dynamique, dit air RAM.

10. Système selon l'une des revendications 1 à 9, **caractérisé en ce que** ledit circuit secondaire (23) dudit deuxième étage de refroidissement est perpendiculaire audit circuit primaire (22) dudit deuxième étage de refroidissement.

11. Système selon l'une des revendications 1 à 10, **caractérisé en ce que** ledit deuxième échangeur thermique (20) est adapté pour être agencé en zone du pylône (6b, P) du moteur de l'aéronef, du ventre mou de l'aéronef ou d'une baie non pressurisée du fuselage de l'aéronef

12. Système selon l'une des revendications 1 ou 11, **caractérisé en ce que** ladite première source d'air froid (14) est formée par un air prélevé sur un écoulement secondaire d'un moteur propulsif (6, 7), dit air fan.

13. Système selon l'une des revendications 1 à 12, **caractérisé en ce que** ledit échangeur thermique cylindrique (10) est formé en Carbure de Silicium.

14. Système selon l'une des revendications 1 à 13, **caractérisé en ce que** ledit équipement (21) est un pack de conditionnement d'air d'un système de contrôle environnemental d'une cabine de l'aéronef.

15. Aéronef comprenant au moins un moteur propulsif (6, 7) et au moins un équipement (11, 12) adapté pour être alimenté en air à température contrôlée, **caractérisé en ce qu'**il comprend en outre au moins un système de refroidissement d'air, dit air bleed, prélevé sur ledit moteur (6, 7) propulsif pour alimenter en air ledit équipement (11, 12) selon l'une des revendications 1 à 14.

## Patentansprüche

1. System zur Kühlung von Luft, als "Abluft " bezeichnet, die aus einem Triebwerk (6, 7) eines Luftfahrzeugs (9) während der Nutzung des Systems entnommen wird und zur Versorgung mindestens einer Ausrüstung (21) mit temperaturgesteuerter Luft bestimmt ist, **dadurch gekennzeichnet, dass** das System umfasst:
- einen Luftkreislauf, der angepasst ist, Mittel zur Entnahme von Abluft aus dem Motor (6, 7) und die Ausrüstung (21) in Fluidverbindung zu bringen, wobei der Luftkreislauf mindestens eine zylindrische Abluftzirkulationsleitung umfasst, die angepasst ist, in einem ersten Bereich (M) des Luftfahrzeugs angeordnet zu werden,
- einen ersten zylindrischen Wärmetauscher (10) zur Luft/Luft-Kühlung, der in die zylindrische Abluftzirkulationsleitung eingebettet ist, worin der erste Wärmetauscher (10) umfasst, einen Primärkreislauf (12), der angepasst ist, von der Abluft versorgt zu werden, und einen Sekundärkreislauf (13), der sich im Wesentlichen parallel zum Primärkreislauf erstreckt und so beschaffen ist, dass er von einer Kaltluftquelle (14) versorgt wird, worin der Primärkreislauf (12) und der Sekundärkreislauf (13) derart ausgestaltet sind, dass sie einen Wärmeaustausch zwischen dem Luftstrom des Primärkreislaufs und dem Luftstrom des Sekundärkreislaufs gewährleisten können, um eine erste Stufe zur Kühlung der aus dem Motor entnommenen Abluft zu bilden,
- einen zweiten Wärmetauscher (20) zur Luftkühlung, der angepasst ist, in einem zweiten Bereich (P) des Flugzeugs angeordnet zu werden, wobei der zweite Wärmetauscher (20) einen Primärkreislauf (22) umfasst, der mit Luft aus dem Primärkreislauf (12) der ersten Kühlstufe versorgt werden kann, und einen Sekundärkreislauf (23), der angepasst ist, von einer Quelle kaltem Fluids (24) versorgt zu werden, wobei diese Kreisläufe derart ausgestaltet sind, dass sie einen Wärmeaustausch zwischen dem Luftstrom des Primärkreislaufs (22) und dem Fluidstrom des Sekundärkreislaufs (23) gewährleisten können, so dass sie eine zweite Kühlstufe für die aus dem Motor entnommene Abluft bilden, wobei der Luftstrom am Ausgang der zweiten Kühlstufe derart angepasst ist, dass er die Ausrüstung (21) versorgt.

2. System nach Anspruch 1, **dadurch gekennzeichnet, dass** der Primärkreislauf (12) und der Sekundärkreislauf (13) des ersten zylindrischen Wärmetauschers (10) der ersten Kühlstufe gegenüber im Gegenstrom ausgerichtet sind.

3. System nach einem der Ansprüche 1 oder 2, **dadurch gekennzeichnet, dass** der zylindrische Wärmetauscher (10) ein zylindrisches Gehäuse (45) umfasst, das sich entlang einer Längsrichtung (Z) erstreckt und an jedem Längsende eine Öffnung zum Einlass/Auslass von Luft aufweist, worin der Wärmetauscher (10) weiter ein Gitter aus wärmeleitendem Material umfasst, das mindestens zwei nicht miteinander kommunizierende Luftzirkulationskreise bildet, die sich zwischen den Einlass-/Auslass-Öffnungen erstrecken, um den Primärkreislauf bzw. den Sekundärkreislauf des Wärmetauschers zu bilden.

4. System nach Anspruch 3, **dadurch gekennzeichnet, dass** das Gitter aus mehreren zylindrischen Hohlrohren (46) besteht, die sich in dem Gehäuse (45) zwischen den Einlass/Auslass-Öffnungen in Längsrichtung erstrecken und so zueinander angeordnet sind, dass ein Zwischenraum (47) zwischen den Luftströmungsrohren frei bleibt, wobei die zylindrischen Hohlrohre (46) einen der primären oder sekundären Kreisläufe des Wärmetauschers bilden und der Zwischenraum (47) zwischen den Rohren den komplementären Kreislauf bildet.

5. System nach Anspruch 4, **dadurch gekennzeichnet, dass** die zylindrischen Hohlrohre (46) so ausgestaltet sind, dass sie den Primärkreislauf des zylindrischen Wärmetauschers (10) bilden.

6. System nach einem der Ansprüche 4 bis 5, **dadurch gekennzeichnet, dass** der zylindrische Wärmetauscher (10) weiter strukturierende Elemente umfasst, die mindestens zwei hohle zylindrische Rohre ( 46) verbinden, um das von den hohlen Rohren (46) gebildete Metallgitter zu versteifen.

7. System nach einem der Ansprüche 1 bis 6, **dadurch gekennzeichnet, dass** der Sekundärkreislauf (23) am Ausgang der zweiten Kühlstufe den Sekundärkreislauf (13) am Eingang der ersten Kühlstufe speist.

8. System nach einem der Ansprüche 1 bis 6, **dadurch gekennzeichnet, dass** die Quelle des kalten Fluids (24), die die zweite Kühlstufe versorgt, unabhängig ist von der Kaltluftquelle (14), die die erste Kühlstufe versorgt.

9. System nach einem der Ansprüche 1 bis 8, **dadurch gekennzeichnet, dass** die Kaltfluidquelle (24) der zweiten Kühlstufe durch Luft mit dynamischem Druck, einen sogenannte RAM-Luft, gebildet wird.

10. System nach einem der Ansprüche 1 bis 9, **dadurch gekennzeichnet, dass** der Sekundärkreislauf (23) der zweiten Kühlstufe senkrecht zu dem Primärkreislauf (22) der zweiten Kühlstufe verläuft.

11. System nach einem der Ansprüche 1 bis 10, **dadurch gekennzeichnet, dass** der zweite Wärmetauscher (20) angepasst ist, dass er im Bereich des Pylons (6b, P) des Flugzeugtriebwerks, der Schwachstelle des Flugzeugs oder an einer nicht unter Druck stehenden Öffnung des Flugzeugrumpfs angeordnet werden kann.

12. System nach einem der Ansprüche 1 oder 11, **dadurch gekennzeichnet, dass** die erste Kaltluftquelle (14) durch Luft gebildet wird, die aus einem Sekundärstrom eines Antriebsmotors (6, 7), als Gebläseluft bezeichnet, entnommen wird

13. System nach einem der Ansprüche 1 bis 12, **dadurch gekennzeichnet, dass** der zylindrische Wärmetauscher (10) aus Siliziumkarbid geformt ist.

14. System nach einem der Ansprüche 1 bis 13, **dadurch gekennzeichnet, dass** die Ausrüstung (21) ein Klimatisierungspaket eines Umgebungskontrollsystems einer Flugzeugkabine ist.

15. Luftfahrzeug mit mindestens einem Triebwerk (6, 7) und mindestens einer Ausrüstung (11, 12), das angepasst ist, mit temperaturgesteuerter Luft versorgt zu werden, **dadurch gekennzeichnet, dass** es weiter mindestens ein System zum Kühlen von Luft, als Abluft bezeichnet, umfasst, das von dem Antriebsmotor (6, 7) entnommen wird, um die Ausrüstung (11, 12) nach einem der Ansprüche 1 bis 14 mit Luft zu versorgen.

## Claims

1. System for cooling air, referred to as bleed air, drawn from an engine (6, 7) of an aircraft (9) during use of the system and intended to supply air at a controlled temperature to at least one item of equipment (21), **characterised in that** said system comprises:
- an air circuit adapted to provide fluid communication between means for drawing bleed air from said engine (6, 7) and said item of equipment (21), said air circuit comprising at least one cylindrical conduit for the flow of bleed air, adapted to be arranged in a first zone (M) of the aircraft,
- a first cylindrical heat exchanger (10) for air/air cooling fitted into said cylindrical conduit for the flow of bleed air, said first exchanger (10) comprising a primary circuit (12) adapted to be supplied by said bleed air, and a secondary circuit (13), extending generally parallel to the primary circuit, adapted to be supplied by a source of cold air (14), said primary circuit (12) and secondary circuit (13) being configured to be able to ensure heat exchanges between the air flow of the primary circuit and the air flow of the secondary circuit, so as to form a first cooling stage for the bleed air drawn from the engine,
- a second heat exchanger (20) for air cooling, adapted to be arranged in a second zone (P) of the aircraft, said second heat exchanger (20) comprising a primary circuit (22) adapted to be supplied by the air from the primary circuit (12) of said first cooling stage, and a secondary circuit (23), adapted to be supplied by a source of cold fluid (24), said circuits being configured to be able to ensure heat exchanges between the air flow of the primary circuit (22) and the fluid flow of the secondary circuit (23), so as to form a second cooling stage for the bleed air drawn from the engine, said air flow exiting this second cooling stage being adapted to supply said item of equipment (21).

2. System as claimed in claim 1, **characterised in that** said primary circuit (12) and said secondary circuit (13) of said first cylindrical heat exchanger (10) of said first cooling stage are orientated in a counterflow manner.

3. System as claimed in any one of claims 1 or 2, **characterised in that** said cylindrical heat exchanger (10) comprises a cylindrical housing (45) extending in a longitudinal direction (Z) and having an opening for admission/evacuation of air at each longitudinal end, said exchanger (10) further comprising a lattice of heat-conducting material forming at least two air flow circuits not communicating with each other and extending between said admission/evacuation openings in order to form the primary circuit and the secondary circuit respectively of said heat exchanger.

4. System as claimed in claim 3, **characterised in that** said lattice is formed from a plurality of cylindrical hollow tubes (46) extending longitudinally in said housing (45) between said admission/evacuation openings and arranged with respect to each other so as to leave free an inter-tube space (47) for air flow, said cylindrical hollow tubes (46) forming one of the primary or secondary circuits of said heat exchanger and the inter-tube space (47) forming the complementary circuit.

5. System as claimed in claim 4, **characterised in that** said cylindrical hollow tubes (46) are configured to form said primary circuit of said cylindrical heat exchanger (10).

6. System as claimed in any one of claims 4 to 5, **characterised in that** said cylindrical exchanger (10) further comprises structural elements connecting at least two cylindrical hollow tubes (46) so as to stiffen the metal lattice formed by said hollow tubes (46).

7. System as claimed in any one of claims 1 to 6, **characterised in that** said secondary circuit (23) exiting said second cooling stage supplies said secondary circuit (13) entering said first cooling stage.

8. System as claimed in any one of claims 1 to 6, **characterised in that** said source of cold fluid (24) supplying said second cooling stage is independent of said source of cold air (14) supplying said first cooling stage.

9. System as claimed in any one of claims 1 to 8, **characterised in that** said source of cold fluid (24) of said second cooling stage is formed by air at dynamic pressure, referred to as RAM air.

10. System as claimed in any one of claims 1 to 9, **characterised in that** said secondary circuit (23) of said second cooling stage is perpendicular to said primary circuit (22) of said second cooling stage.

11. System as claimed in any one of claims 1 to 10, **characterised in that** said second heat exchanger (20) is adapted to be arranged in the zone of the pylon (6b, P) of the engine of the aircraft, of the soft belly of the aircraft or of a non-pressurised bay of the fuselage of the aircraft.

12. System as claimed in any one of claims 1 or 11, **characterised in that** said first source of cold air (14) is formed by air drawn from a secondary flow of a propulsion engine (6, 7), referred to as fan air.

13. System as claimed in any one of claims 1 to 12, **characterised in that** said cylindrical heat exchanger (10) is formed from silicon carbide.

14. System as claimed in any one of claims 1 to 13, **characterised in that** said item of equipment (21) is an air conditioning pack of an environmental control system of a cabin of the aircraft.

15. Aircraft comprising at least one propulsion engine (6, 7) and at least one item of equipment (11, 12) adapted to be supplied with air at a controlled temperature, **characterised in that** it further comprises at least one system for cooling air, referred to as bleed air, drawn from said propulsion engine (6, 7) in order to supply air to said item of equipment (11, 12) as claimed in any one of claims 1 to 14.
